# DEMANDE DE BREVET EUROPEEN

(11) **EP 4 550 227 A1**
(43) Date de publication de la demande: **07.05.2025**
(21) Numéro de dépôt: 24306840.0
(22) Date de dépôt: 31.10.2024
(51) Int. Cl.: G06Q 10/00, G02C 11/00, G02C 11/02, G09F 3/10, G09F 3/20

(54) **DISPOSITIF D'IDENTIFICATION DE LUNETTES AFIN DE LES RESTITUER À LEUR PROPRIÉTAIRE EN CAS DE PERTE**

(30) Priorité: 31.10.2023 FR 2311835
(71) Demandeur: Ketelers, Bettina, 75018 Paris (FR)
(72) Inventeur: Ketelers, Bettina, 75018 Paris (FR)
(74) Mandataire: Cabinet Netter

(57) **Abrégé**

L'invention concerne un dispositif novateur permettant l'identification des lunettes ainsi que la restitution des lunettes à leur propriétaire légitime cas de perte. Il est constitué d'une application informatique qui génère un code d'identification unique, associé aux informations identitaires du propriétaire des lunettes. Le code d'identification unique est transmis à un système de marquage par gravure sur les montures ou les verres des lunettes, ou par impression sur une étiquette autocollante qui est apposée sur les lunettes. Lorsqu'une paire de lunettes est perdue et retrouvée par une tierce personne, elle peut être déposée chez un opticien équipé de ladite application. L'opticien saisit le code d'identification unique dans l'application, ce qui déclenche une notification au propriétaire légitime des lunettes. Cette notification informe le propriétaire que ses lunettes ont été retrouvées, géo localisées et sont prêtes à être récupérées chez ledit opticien. Cette invention répond donc au problème technique de la non identification des lunettes perdues ainsi que leur restitution en apportant une solution globale de manière efficace et sécurisée. Le dispositif selon l'invention est particulièrement destiné à l'industrie des lunettes.

## Description

L'invention concerne un dispositif d'aide à la restitution de paires de lunettes en cas de perte, et un procédé de restitution de paires de lunettes en pareil cas. L'invention concerne également un procédé d'identification de paires de lunettes.

Dans l'état actuel de la technique, la gestion des objets perdus et trouvés, y compris les paires de lunettes, repose principalement sur des méthodes traditionnelles peu efficaces, telles que l'organisation de centres d'objets trouvés, ou des méthodes technologiques à durée de vie limitée, comme les mini puces électroniques de géolocalisation.

Ces méthodes présentent plusieurs limitations et inconvénients.

Ces méthodes soufrent d'informations incomplètes : les informations disponibles sur les objets trouvés, en particulier lorsqu'il s'agit d'une paire de lunettes, sont sinon absentes du moins limitées. Cela peut rendre difficile, en pratique impossible, la restitution au propriétaire légitime en cas de perte.

Ces méthodes s'accompagnent en outre d'un processus de restitution complexe : pour les personnes trouvant une paire de lunettes, le processus de restitution implique souvent de contacter un ou plusieurs centres de gestion des objets perdus ou les forces de l'ordre, ce qui peut être fastidieux et peu efficace.

Concernant les processus basés sur l'utilisation d'une puce électronique de géolocalisation, les dispositifs actuels de pose d'une puce électronique de géolocalisation assez petite pour être intégrée à la monture d'une paire de lunettes présente une durée de vie trop limitée.

L'état actuel de la technique ne propose donc pas de solution globale et efficace pour simplifier et sécuriser le processus de restitution de paires de lunettes perdues.

L'invention proposée ici vise à remédier à ces lacunes afin d'obtenir une identification des lunettes à durée illimitée avec un processus de restitution complet.

On propose un dispositif d'aide à la restitution d'une paire de lunettes en cas de perte, comportant une application informatique dédiée, avec une base de données. Cette application est agencée pour saisir des informations associées à la paire de lunettes, ces informations comprenant des coordonnées permettant de contacter un propriétaire de la paire de lunettes, et enregistrer ces informations dans la base de données en un profil unique. L'application est agencée pour générer un code alphanumérique unique et enregistrer ce code en tant que code d'identification dans la base de données, en association avec le profil du propriétaire. L'application est agencée pour transmettre le code d'identification à un dispositif de type graveur ou imprimante pour marquer la monture ou les verres de lunettes avec le code d'identification. L'application est agencée pour réagir à la lecture d'un code d'identification par la génération d'un code de confirmation unique et l'envoi d'une notification aux coordonnées de contact associées au code d'identification, cette notification comprenant le code de confirmation. L'application est agencée pour réagir à l'entrée du code de confirmation en enregistrant un statut de la paire de lunettes comme restituée.

Le dispositif proposé identifie chaque paire de lunettes à l'aide d'un code unique, généré par l'application informatique et gravé, collé ou apposé sur la paire de lunettes afin de pouvoir la restituer à leur propriétaire légitime en cas de perte.

Ce dispositif concerne plusieurs domaines techniques, tels que la gestion des objets perdus et trouvés, la sécurité des données personnelles, la technologie de gravure et d'impression, la communication numérique, et la génération de codes uniques.

Le dispositif proposé permet de remédier aux inconvénients précités.

Selon une première caractéristique, le dispositif proposé comporte une application informatique spécialement conçue pour générer un code d'identification unique. Ce code est créé en associant des informations du propriétaire de la paire de lunettes, telles que son nom, son numéro de téléphone, son adresse électronique, et d'autres données pertinentes. Ce code peut prendre la forme d'un code, ou chaîne, alphanumérique, d'un code, ou chaîne, numérique, d'un code à barres, d'un code QR ou de tout autre format lisible par des dispositifs optiques.

Selon une deuxième caractéristique, le code d'identification est transmis par l'application informatique à un dispositif de marquage, qui peut être un graveur ou une imprimante. Le dispositif de marquage applique ce code sur une surface des montures ou des verres de la paire de lunettes ou sur une plaque à fixer sur cette paire de lunettes. Ce code peut être transmis également à une imprimante afin d'imprimer ledit code sur une étiquette autocollante ou tout autre support technique permettant d'apposer le code d'identification sur la paire de lunettes. Cette étape assure que chaque paire de lunettes est associée à un code d'identification unique.

Selon une troisième caractéristique, le dispositif permet lorsque la paire de lunettes est perdue par son propriétaire et retrouvée par une tierce personne, de la restituer. La tierce personne ayant trouvé la paire de lunettes, la dépose chez un opticien équipé de l'application informatique associée à l'invention ou ayant accès à celle-ci. L'opticien saisit le code d'identification unique de la paire de lunettes retrouvée dans l'application. L'application déclenche un processus de notification via l'envoi d'un message au propriétaire légitime de la paire de lunettes afin de l'informer que celle-ci a été retrouvée ainsi que la géolocalisation de l'opticien qui pourra la lui restituer. Le logiciel déclenche également l'envoi d'un code de confirmation unique permettant la sécurisation de la restitution de la paire de lunettes. Le propriétaire justifie de son identité et présente le code de confirmation unique généré par l'application pour s'authentifier auprès de l'opticien et récupère ainsi sa paire de lunettes égarée.

Le dispositif proposé répond donc au problème technique l' absence d'identification de paires de lunettes perdues, ainsi qu'à celui leur restitution de manière efficace et sécurisée.

On propose également un procédé d'identification de paires de lunettes comportant les étapes suivantes : saisir dans une application informatique dédiée, avec une base de données, des informations associées à une paire de lunettes, ces informations comprenant des coordonnées permettant de contacter un propriétaire de la paire de lunettes, et enregistrer ces informations en un profil unique dans la base de données de l'application informatique ; générer, au moyen de l'application informatique, un code alphanumérique unique et enregistrer ce code en tant que code d'identification dans la base de données en association avec le profil du propriétaire ; transmettre, au moyen de l'application informatique, le code d'identification à un dispositif de type graveur ou imprimante ; marquer, par le dispositif de type graveur ou imprimante, la monture ou les verres de la paire de lunettes avec le code d'identification.

On propose enfin un procédé de restitution de paires lunettes en cas de perte comportant les étapes suivantes : lire un code d'identification marqué sur la monture ou les verres d'une paire de lunettes ; associer le code d'identification à un profil unique d'un propriétaire enregistré dans une base de données d'une application informatique dédiée ; générer au moyen de l'application informatique un code de confirmation unique et envoyer une notification à des coordonnées de contact associées au profil du propriétaire dans la base de données, cette notification comprenant le code de confirmation ; enregistrer un statut de la paire de lunettes comme restituée en entrant le code de confirmation dans l'application informatique.

D'autres caractéristiques et avantages de l'invention apparaîtront à la lecture de la description détaillée ci-après, faite en relation avec les dessins, sur lesquels :
- la figure 1 est un ordinogramme représentant un procédé selon l'invention ;
- la figure 2 est un schéma fonction d'un dispositif selon l'invention.

Les dessins annexés contiennent des éléments de caractère certain. Ils pourront donc non seulement servir à compléter l'invention, mais aussi contribuer à sa définition.

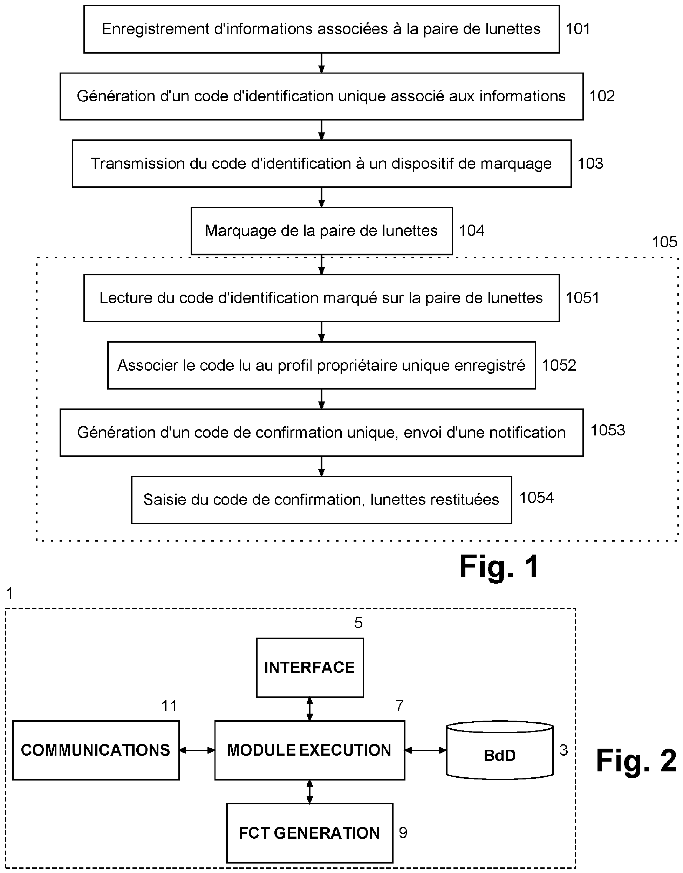

En relation avec la figure 1, on décrit une réalisation préférée d'un procédé selon l'invention d'identification et de restitution d'une paire de lunettes en cas de perte, et, en relation avec la figure 2, un dispositif d'aide à la restitution d'une paire de lunettes en cas de perte, également selon l'invention. Ce dispositif comporte une application informatique dédiée 1, avec une base de données 3.

Dans une première étape 101, on enregistre des informations associées à la paire de lunettes, y compris des coordonnées de son propriétaire, en particulier dans l'application 1. L'application 1 est agencée de manière à permettre la saisie des informations associées à la paire de lunettes, en particulier des coordonnées permettant de contacter le propriétaire de cette paire de lunettes. Par exemple, l'application 1 comprend une interface utilisateur 5, en particulier de type graphique, agencée de manière à permettre la saisie de telles informations. Selon une réalisation préférée, les informations associées à la paire de lunette, en particulier dans la base de données 3, comprennent le nom du propriétaire, une adresse, un numéro de téléphone, une adresse électronique et toutes autres données pertinentes.

Selon une réalisation préférée, l'opticien accède à l'application 1 et entre les informations personnelles requises concernant le propriétaire légitime de la paire de lunettes.

L'application 1 est en outre agencée de manière à enregistrer les informations saisies dans la base de données 3. En particulier, la base 3 est organisée de manière telle que ces informations soient enregistrées en un profil unique, ou profil de propriétaire. L'application 1 peut comprendre un module d'exécution 7 agencé pour collecter les informations saisies dans l'interface 5 et les mémoriser dans la base 3.

Dans une seconde étape 102, on génère, en particulier dans l'application 1, un code d'identification unique associé aux informations enregistrées. L'application 1 est agencée de manière à générer un code alphanumérique unique, par exemple sous la forme d'une chaîne unique de caractères alphanumériques. Cette chaîne est unique au moins dans la base de données 3 de l'application 1. L'application 1 est en outre agencée de manière que ce code soit enregistré en tant que code d'identification dans la base de données 3 en association avec le profil du propriétaire.

L'application 1 comprend par exemple une fonction de génération 9, capable d'être appelée par le module d'exécution 7, et agencée de manière à générer une chaîne de caractères alphanumériques unique. Par exemple, le module d'exécution 7 et la fonction de génération 9 peuvent être exécutés sur le terminal d'un opticien, tel qu'un ordinateur ou un téléphone. L'application 1 peut être installée et exécutée en partie au moins sur un dispositif informatique propre à l'opticien. L'application 1 est avantageusement compatible avec les smartphones et les tablettes courants, c'est-à-dire que l'application 1 peut, en partie au moins, être exécutée par les moyens de calcul et la mémoire de la tablette ou du smartphone. L'application 1 peut être en partie au moins exécutée par un ordinateur personnel accessible chez l'opticien ou accessible depuis un tel ordinateur. Une partie au moins de l'application 1 peut être exécutée sur un serveur accessible à l'opticien, en particulier depuis son terminal. Par exemple, le module d'exécution 7, la base de données 3 et la fonction de génération 9 sont exécutés sur un serveur, tandis que l'interface 5 est exécutée sur le terminal de l'opticien.

Le module d'exécution 7 est par exemple agencé pour réagir à la saisie de données dans l'interface 5 en appelant la fonction de génération 9 pour obtenir une chaîne alphanumérique unique, d'une part, et, d'autre part, en commandant la mémorisation dans la base de données 3 d'un nouveau profil utilisateur associé à cette chaîne.

Le code d'indentification peut être créé en associant des informations du propriétaire, telles que son nom, son numéro de téléphone, son adresse électronique et/ou d'autres données pertinentes. Par exemple, la fonction de génération 9 peut être agencée de manière à recevoir en entrée des données de type chaîne alphanumérique relatives à un nom, un numéro de téléphone et/ou une adresse de courrier électronique, et à générer un code unique à partir de ces données. Par exemple, la fonction de génération 9 peut être basée sur une fonction de hachage, en particulier de type cryptographique, ou une fonction de concaténation. Ce code est tel qu'il puisse prendre la forme d'un code alphanumérique, d'un code numérique, d'un code à barres, d'un code QR ou de tout autre format lisible par des dispositifs optiques.

L'application 1 est agencée de manière à générer automatiquement le code d'identification unique associé à ce profil. Le code d'identification unique est sous forme d'un code alphanumérique.

Dans une troisième étape 103, on transmet le code d'identification unique à un dispositif de marquage sélectionné parmi un graveur et une imprimante.

Par exemple, l'application 1 est agencée de manière à transmettre le code d'identification au dispositif de marquage. En particulier, l'application 1 peut comprendre un module de communications 11 capable d'échanger des données avec le dispositif de marquage. L'application 1 est agencée de manière à transmettre le code d'identification au dispositif de type graveur ou imprimante en vue de marquer la monture ou les verres de la paire de lunettes avec le code d'identification. Il s'agit d'apposer sur la paire de lunettes, sa monture ou ses verres, une représentation du code d'identification unique. Cette représentation peut prendre la forme d'un code numérique ou alphanumérique représentatif du code d'identification unique. Cette représentation peut prendre la forme d'un code à barre. Cette représentation peut prendre la forme d'un QR code. Dans la présente description, l'expression "code d'identification" ailleurs que dans la base de données 3, désigne une représentation de ce code sous une forme lisible par un dispositif optique. Cette représentation peut prendre la forme de la chaîne alphanumérique du code lui-même.

Dans une quatrième étape 104, on marque la paire de lunettes avec le code d'identification unique. Le marquage se fait sur une surface de la monture ou des verres. En complément ou en remplacement, on peut imprimer le code d'identification unique sur une étiquette autocollante à apposer sur la paire de lunettes ou sur un accessoire de cette paire, comme un étui par exemple.

Le dispositif de marquage applique ce code d'identification unique sur la surface de la monture ou des verres. En remplacement, le dispositif de marquage applique le code en question sur une plaque apte à être fixée sur les lunettes.

En marquant la monture ou les verres de la paire de lunettes, on s'assure que celle-ci est réellement associée au code d'identification unique.

Le code d'identification unique est marqué sous forme d'un code numérique, d'un code QR ou d'un code à barres.

Le propriétaire de la paire de lunettes peut choisir la méthode de gravure sur monture pour apposer le code d'identification unique sur ses lunettes. L'opticien, équipé de l'application 1 ou accédant à celle-ci, peut valider l'envoi du code d'identification unique au graveur via l'application 1, en particulier le module de communications 11 de l'application 1. Une fois le code vérifié sur le graveur, il peut procéder à la gravure du code d'identification unique de manière précise sur une branche de la monture. L'emplacement de la zone à graver peut être choisi en fonction du modèle de lunettes. Le cas échéant, la taille des caractères de la gravure est également choisie en fonction de la nature du matériau et de l'épaisseur des branches.

Le propriétaire de la paire de lunettes peut également choisir la méthode de gravure sur les verres pour apposer le code d'identification unique sur ses lunettes.

L'opticien, équipé de l'application 1 ou accédant à celle-ci, peut valider l'envoi du code d'identification unique au graveur sur verre via l'application 1. Une fois le code vérifié sur le graveur, il peut procéder à la gravure du code d'identification unique de manière précise sur les verres. L'emplacement de la zone à graver peut être choisi en fonction du modèle des lunettes. Le cas échéant, la taille des caractères de la gravure peut également être choisie en fonction de la taille et de l'épaisseur des verres.

Le propriétaire de la paire de lunettes peut encore choisir la méthode de gravure sur plaque à visser pour apposer le code d'identification unique sur les lunettes. L'opticien, équipé de l'application 1 ou accédant à celle-ci, peut valider l'envoi du code d'identification unique au graveur via l'application 1. Une fois le code vérifié sur le graveur, il peut procéder à la gravure du code d'identification unique, de manière précise, sur une plaque métallique puis la visser sur une branche de la monture des lunettes.

L'emplacement de la zone où visser la plaque est choisie en fonction du modèle des lunettes. La taille de la plaque est également choisie en fonction de la nature du matériau, et de l'épaisseur des branches.

Le propriétaire de la paire de lunette peut choisir la méthode d'impression pour apposer le code d'identification unique sur ses lunettes. L'opticien, équipé de l'application 1, valide l'envoi du code d'identification unique à l'imprimante via l'application informatique. Une fois le code vérifié sur l'imprimante, il procède à l'impression du code d'identification unique sur une étiquette autocollante afin d'apposer cette dernière de manière précise sur la branche des montures des lunettes. L'emplacement de la zone où coller l'étiquette est choisie en fonction du modèle des lunettes. La taille des caractères de l'impression est également choisie en fonction de l'épaisseur des branches.

Cette quatrième étape 104 peut, dans certains cas au moins, se faire simultanément à la troisième étape 103.

Les quatre étapes ci-dessus 101 à 104 correspondent à un procédé d'identification d'une paire de lunettes.

Dans une cinquième étape 105, après le dépôt volontaire de la paire de lunettes par toute personne les trouvant chez une personne ayant accès à l'application 1, typiquement un opticien agréé, ce dernier entre le code d'identification unique dans l'application 1, ce qui déclenche l'envoi automatique d'une notification et d'un code de confirmation unique au propriétaire légitime pour l'informer que ses lunettes ont été retrouvées et sont prêtes à être récupérées chez l'opticien. Cette cinquième étape illustre le procédé de restitution d'une paire de lunettes en cas de perte selon l'invention.

L'application 1 est agencée de manière à réagir à la lecture d'un code d'identification par la génération d'un code de confirmation unique et l'envoi d'une notification aux coordonnées de contact associées au code d'identification dans la base de données 3. Cette notification comprend le code de confirmation.

Cette cinquième étape 105 comprend une première sous-étape 1051 consistant à lire le code d'identification marqué sur la monture ou les verres de la paire de lunettes. Typiquement, en cas de perte puis de découverte d'une paire de lunettes perdue, un tiers dépose cette dernière chez un opticien équipé de l'application 1 ou d'un accès à celle-ci. Selon un mode de réalisation préféré, l'opticien utilise un dispositif de lecture optique relié à un ordinateur afin d'entrer (saisir) le code d'identification unique présent sur les lunettes dans l'application 1.

La cinquième étape 105 comprend ensuite une seconde sous-étape 1052 consistant à associer le code d'identification au profil unique d'un propriétaire enregistré dans une base de données 3. Le module d'exécution 7 peut être agencé de manière à rechercher le profil propriétaire associé au code d'indentification lu dans la base 3.

Le cas échéant, le module d'exécution 7 peut être agencé pour extraire ce code d'une représentation de ce code marquée sur la paire de lunettes. L'application 1 identifie presque instantanément le propriétaire associé au code grâce à la base de données 3. Cette base 3 peut être sécurisée.

Selon une réalisation préférée, on génère, en particulier avec l'application 1, un code de confirmation unique et on envoie une notification aux coordonnées de contact associées au profil du propriétaire dans la base de données 3. Cette notification comprend le code de confirmation (troisième sous-étape 1053).

De préférence, l'application 1 est agencée de manière à envoyer ce message de notification automatiquement au propriétaire, à son adresse électronique ou sur son téléphone portable selon les informations du profil stocké dans la base de données 3. Ce message peut informer le propriétaire que sa paire de lunettes a été retrouvée et qu'il peut la récupérer chez l'opticien, avec les coordonnées et adresse dudit opticien.

L'application 1 est agencée de manière à envoyer également le code de confirmation à présenter à l'opticien afin de sécuriser la restitution des lunettes à leur propriétaire légitime.

Le propriétaire légitime peut se présenter chez l'opticien qui a récupéré sa paire de lunettes perdue. On peut lui demander de justifier son identité au moyen d'une pièce d'identité. Le propriétaire présente le code de confirmation. Celui-ci est entré dans l'application 1, en particulier par l'intermédiaire de l'interface 5. L'application 1 est agencée de manière à réagir à l'entrée de ce code de confirmation en enregistrant un statut des lunettes comme restituées à leur propriétaire (quatrième sous-étape 1054).

Le dispositif selon l'invention est particulièrement destiné à l'industrie des lunettes. Il englobe un procédé intégré à la fois informatique et mécanique, créant une synergie entre ces domaines pour résoudre un problème concret et récurrent de la vie quotidienne.

L'utilisation de l'invention n'est pas limitée à un seul emplacement ou à un groupe restreint d'utilisateurs, mais peut être étendue à une variété de lieux, tels que des opticiens, des centres de gestion des objets perdus, des établissements publics, des lieux de transport, et d'autres endroits où des lunettes peuvent être égarées ou trouvées.

L'invention peut également être vue comme un procédé pour identifier et restituer des lunettes à leur propriétaire en cas de perte caractérisé en ce qu'il comporte les étapes suivantes :
a. Enregistrer les informations associées aux lunettes, y compris les coordonnées du propriétaire, dans une application informatique dédiée ;
b. Générer un code d'identification unique associé aux informations enregistrées dans ladite application informatique ;
c. Transmettre le code d'identification unique à un dispositif de marquage, sélectionné parmi un graveur ou une imprimante, pour marquer les lunettes avec le code d'identification unique sur une surface des montures, des verres des lunettes, sur une plaque à visser sur les lunettes, ou pour imprimer le code d'identification unique sur une étiquette autocollante à apposer sur les lunettes ;
d. Après le dépôt volontaire des lunettes par toute personne les trouvant chez un opticien agréé, l'opticien entre le code d'identification unique dans l'application informatique, déclenchant ainsi l'envoi automatique d'une notification et d'un code de confirmation unique au propriétaire légitime pour l'informer que ses lunettes ont été retrouvées et sont prêtes à être récupérées chez l'opticien.

Les informations de la base de données de l' application informatique dédiée peuvent comprendre le nom du propriétaire, son adresse, son numéro de téléphone, son adresse électronique ou toutes autres données pertinentes.

Le code d'identification unique peut être associé aux données personnelles collectées par l'application informatique dédiée du propriétaire légitime des lunettes de type : son nom, son numéro de téléphone, son adresse électronique ou toutes autres données pertinentes.

Le code d'identification unique peut être généré sous forme de code alphanumérique, code numérique, code à barres, de code QR ou de tout autre code lisible par des dispositifs optiques.

## Revendications

1. Dispositif d'aide à la restitution d'une paire de lunettes en cas de perte, **caractérisé en ce qu'**il comporte une application informatique dédiée (1), avec une base de données (3), cette application (1) étant agencée pour :
a saisir des informations associées à la paire de lunettes, ces informations comprenant des coordonnées permettant de contacter le propriétaire de la paire de lunettes, et enregistrer ces informations dans la base de données (3) en un profil unique ;
b générer un code alphanumérique unique et enregistrer ce code en tant que code d'identification dans la base de données (3), en association avec le profil du propriétaire ;
c transmettre le code d'identification à un dispositif de type graveur ou imprimante pour marquer la monture ou les verres de la paire de lunettes avec le code d'identification ;
d réagir à la lecture d'un code d'identification par la génération d'un code de confirmation unique et l'envoi d'une notification aux coordonnées de contact associées au code d'identification, cette notification comprenant le code de confirmation ;
e réagir à l'entrée du code de confirmation en enregistrant un statut de la paire de lunettes comme restituée.

2. Dispositif selon la revendication 1, **caractérisé en ce que** les informations de la base de données (3) de l'application informatique dédiée (1) comprennent le nom du propriétaire, son adresse, son numéro de téléphone, son adresse électronique ou toutes autres données pertinentes.

3. Dispositif selon l'une des revendications 1 et 2, **caractérisé en ce que** le code d'identification unique est associé aux données personnelles collectées par l'application informatique dédiée du propriétaire légitime de la paire de lunettes telles que son nom, son numéro de téléphone, son adresse électronique ou toutes autres données pertinentes.

4. Dispositif selon l'une des revendications précédentes, **caractérisé en ce que** le code d'identification unique est marqué sous forme de code alphanumérique, de code numérique, de code à barres, de code QR ou de tout autre code lisible par des dispositifs optiques.

5. Procédé d'identification d'une paire de lunettes, **caractérisé en ce qu'**il comporte les étapes suivantes :
a. saisir dans une application informatique dédiée, avec une base de données, des informations associées à la paire de lunettes, ces informations comprenant des coordonnées permettant de contacter le propriétaire de la paire de lunettes, et enregistrer ces informations en un profil unique dans la base de données de l'application informatique ;
b. générer, avec l'application informatique, un code alphanumérique unique et enregistrer ce code en tant que code d'identification dans la base de données en association avec le profil du propriétaire ;
c. transmettre, avec l'application informatique (1), le code d'identification à un dispositif de type graveur ou imprimante ;
d. marquer, par le dispositif de type graveur ou imprimante, la monture ou les verres de la paire de lunettes avec le code d'identification.

6. Procédé de restitution d'une paire de lunettes en cas de perte, **caractérisé en ce qu'**il comporte les étapes suivantes :
a. lire un code d'identification marqué sur la monture ou les verres de la paire de lunettes ;
b- associer le code d'identification à un profil unique d'un propriétaire enregistré dans une base de données (3) d'une application informatique dédiée (1) ;
c- générer avec l'application informatique (1) un code de confirmation unique et envoyer une notification à des coordonnées de contact associées au profil du propriétaire dans la base de données (3), cette notification comprenant le code de confirmation ;
d- enregistrer un statut de la paire de lunettes comme restituée en entrant le code de confirmation dans l'application informatique.
